# FASCICULE DE BREVET EUROPEEN

(11) **EP 2 877 756 B1**
(45) Date de publication et mention de la délivrance du brevet: **19.06.2019**
(21) Numéro de dépôt: 13744669.6
(22) Date de dépôt: 02.07.2013
(51) Int. Cl.: F16H 37/02

(54) **DISPOSITIF DE TRANSMISSION DE PUISSANCE RÉVERSIBLE**
UMKEHRBARE KRAFTÜBERTRAGUNGSVORRICHTUNG
REVERSIBLE POWER TRANSMISSION DEVICE

(30) Priorité: 25.07.2012 FR 1257204
(43) Date de publication de la demande: 03.06.2015
(73) Titulaire: PSA Automobiles SA, 78300 Poissy (FR)
(72) Inventeur: POGAM, Matthieu, F-78400 Chatou (FR)
(86) Numéro de dépôt international: PCT/FR2013/051550
(87) Numéro de publication internationale: WO 2014/016488

(56) Documents cités:
- DE-A1- 4 207 093
- DE-A1- 19 631 294
- US-A1- 2005 153 804

## Description

La présente invention concerne un dispositif de transmission de puissance comportant un arbre primaire destiné à être connecté à un dispositif de propulsion tel qu'un moteur thermique d'un véhicule automobile, il comporte aussi un arbre secondaire destiné à être connecté aux roues via un différentiel et aussi un dispositif de transmission à variation continue CVT reliant l'arbre primaire et l'arbre secondaire.

Un tel dispositif de transmission de puissance est connu, par exemple, de la demande de brevet français FR 2 945 602 A1.

Comme dans le brevet cité ci-dessus Fig. 1 de la présente demande montre un schéma d'une architecture classique d'une transmission de type CVT utilisant une CVT coaxiale, un moteur 4 étant relié via un embrayage à un arbre primaire 3 sur lequel est monté la CVT qui démultiplie en fonction de son coefficient de fonctionnement le couple du moteur 4. Par l'intermédiaire des engrenages 11, 12a, de l'arbre secondaire 5 et d'un différentiel 6 le couple est transmis aux roues.

Les défauts habituels avec une telle architecture sont, d'une part une ouverture de CVT souvent trop faible, et d'autre part, des rendements inférieurs aux engrenages qui sont classiquement utilisés dans les transmissions. Ces deux notions étant de plus directement liées.

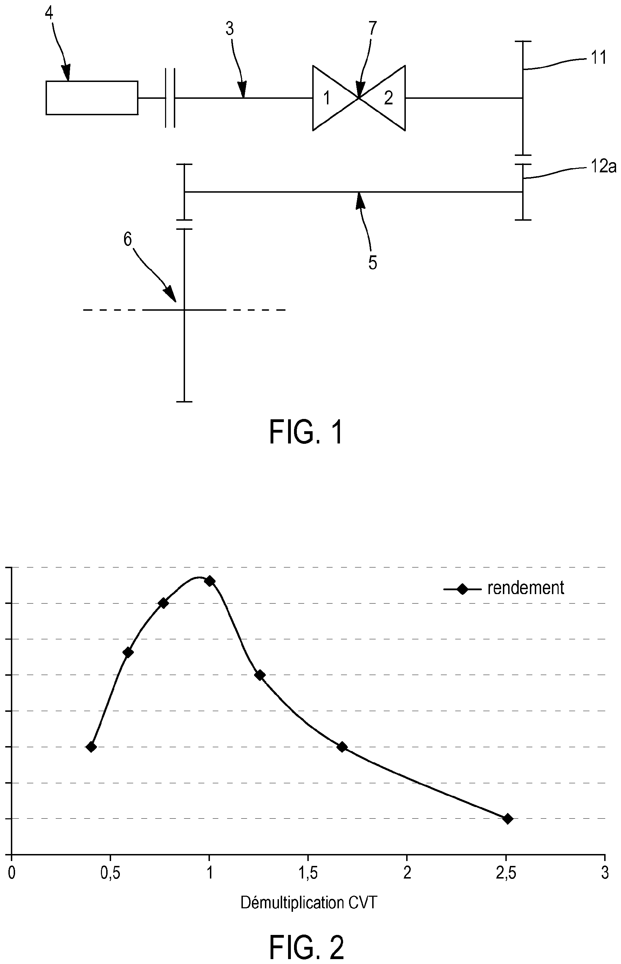

Fig. 2 montre un exemple d'évolution du rendement d'une CVT en fonction de son coefficient. Plus on cherche à augmenter l'ouverture, plus le rendement est faible. A l'inverse, plus on cherche à améliorer le rendement, plus l'ouverture se verra réduite.

US2005/153804A1 divulgue un dispositif de transmission de puissance selon le préambule de la revendication 1.

C'est le but de la présente invention de proposer un dispositif de transmission de puissance avec un rendement amélioré pour une même ouverture ou un rendement amélioré pour une plus grande ouverture.

L'objet de la présente invention est un dispositif de transmission de puissance comportant un arbre primaire destiné à être connecté à un dispositif de propulsion tel qu'un moteur thermique d'un véhicule automobile, un arbre secondaire destiné à être connecté aux roues via un différentiel et un dispositif de transmission à variation continue CVT reliant l'arbre primaire et l'arbre secondaire, ledit dispositif de transmission à variation continue CVT est de type coaxial réversible dont l'entrée située sur un premier côté et la sortie situé sur un deuxième côté peuvent se substituer de façon symétrique, un système d'engrenages et de dispositifs de couplage/découplage permettant un premier mode de fonctionnement, où l'arbre primaire est relié au premier côté et l'arbre secondaire au deuxième côté du dispositif de transmission à variation continue CVT et un deuxième mode de fonctionnement où l'arbre primaire est relié au deuxième côté et l'arbre secondaire au premier côté du dispositif de transmission à variation continue CVT.

Le système d'engrenage et de couplage/découplage comprend un arbre tertiaire qui peut être relié d'un côté à l'arbre primaire par le positionnement d'un premier synchroniseur ou d'un crabot sur l'arbre primaire dans une première position où l'arbre primaire est en prise avec un premier pignon fou qui s'engrène dans un premier pignon fixé à l'arbre tertiaire, un deuxième pignon fixé sur l'arbre tertiaire s'engrène dans un deuxième pignon fou sur un arbre d'entrée situé sur le deuxième côté du dispositif CVT, un deuxième synchroniseur ou crabot positionné sur l'arbre d'entrée peut être en prise avec le deuxième pignon fou et la sortie du premier côté du dispositif CVT étant reliée par un engrenage comprenant un troisième pignon fixe, un troisième pignon fou et un troisième synchroniseur ou crabot à l'arbre secondaire pour lui transmettre un couple d'entraînement.

Selon un mode de réalisation préféré, le premier synchroniseur ou crabot peut être mis dans une deuxième position où il est découplé du premier pignon fou et en prise avec un pignon fixé sur un arbre d'entrée du premier côté du dispositif CVT, le deuxième synchroniseur ou crabot étant découplé du deuxième pignon fou et en prise avec un quatrième pignon fou sur l'arbre de sortie du deuxième côté du dispositif CVT qui s'engrène dans un quatrième pignon fixé sur l'arbre secondaire, le troisième synchroniseur ou crabot étant découplé du troisième pignon fou.

Selon une variante, le dispositif CVT est monté sur l'arbre secondaire.

De préférence, les démultiplications en entrée et en sortie du dispositif CVT sont adaptées de manière à améliorer son rendement et/ou augmenter son ouverture.

La présente invention concerne en outre un véhicule automobile comprenant un dispositif de transmission de puissance tel que décrit ci-dessus.

L'invention sera mieux comprise à la lecture de la description qui suit et à l'examen des figures qui l'accompagnent. Ces figures ne sont données qu'à titre illustration, mais nullement limitatif de l'invention.
- Fig. 1: montre schématiquement l'architecture classique d'une transmission de type CVT utilisant une CVT coaxiale selon l'état de la technique;
- Fig. 2: montre la variation du rendement mécanique d'une CVT coaxiale en fonction du coefficient selon l'état de la technique;
- Fig. 3: montre un schéma général d'un dispositif de transmission de puissance selon l'invention;
- Fig. 4: montre deux modes de fonctionnement de la transmission selon l'invention.

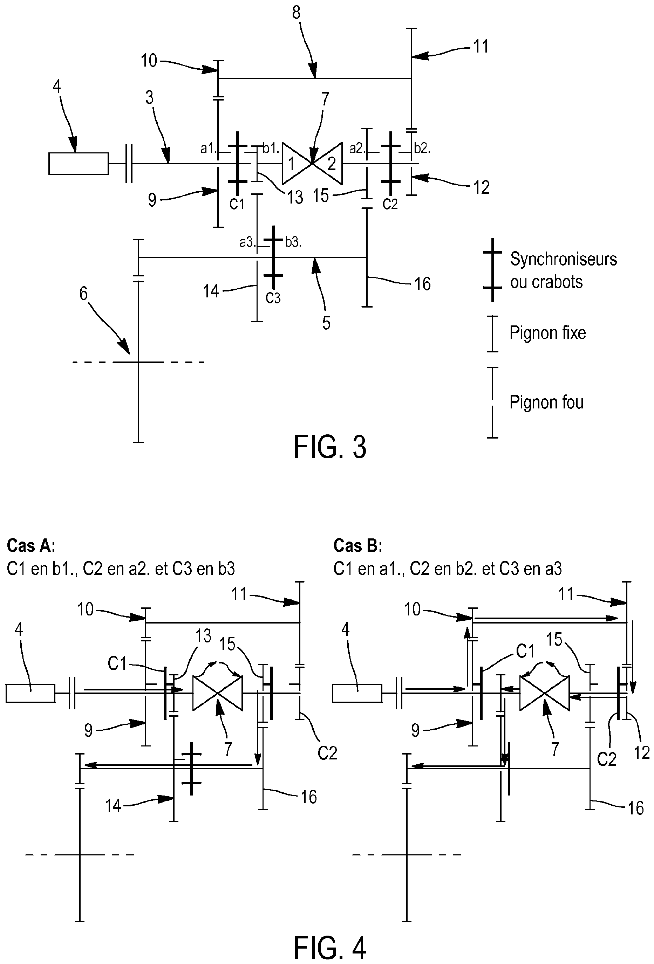

Fig. 3 présente le schéma général du concept selon l'invention. Un moteur 4, tel qu'un moteur thermique d'un véhicule automobile est relié à un arbre primaire 3 via un embrayage. Sur l'arbre primaire 3 est agencé un dispositif de transmission à variation continue, appelé brièvement CVT dans ce qui suit. Le CVT 7 présente deux côtés 1 et 2. L'entrée située sur un premier côté 1 et la sortie située sur un deuxième côté 2 coaxiales de la CVT fonctionnent de façon symétrique, c'est-à-dire que le côté 1 peut servir, dans un mode de fonctionnement, d'entrée de la CVT 7 et dans ce cas le côté 2 joue le rôle de sortie. Dans un autre mode de fonctionnement, l'entrée et la sortie sont inversées, l'entrée de la CVT se trouvant du côté 2 et la sortie du côté 1.

Fig. 4 montre les deux modes de fonctionnement: cas A et cas B l'un à côté de l'autre.

Selon l'invention, un troisième arbre 8 est prévu qui fait partie d'un système d'engrenage et de dispositif de couplage/découplage permettant l'utilisation de la CVT 7 dans le sens inverse avec l'entrée du côté 2 et la sortie du côté 1.

Plus en détail, ce système comprend un premier synchroniseur C1 qui peut se déplacer entre une position a1 où il est en prise avec un pignon fou 9 sur l'arbre primaire 3 et une position b1 où le synchroniseur C1 et/ou crabot est en prise avec un pignon 13 fixé sur un arbre d'entrée de la CVT 7. Cette dernière position de C1 correspond au mode de fonctionnement du Cas 1 où le côté 1 sert d'entrée de la CVT 7. Quand le synchroniseur ou crabot C1 est en prise avec le pignon fou 9, ce pignon fou 9 entraîne l'arbre tertiaire 8 par l'intermédiaire d'un pignon fixe 10.

Sur l'autre extrémité de l'arbre tertiaire 8 est monté fixe le pignon 11 qui s'engrène dans le pignon fou 12 monté sur un arbre qui sert d'arbre d'entrée si le synchroniseur ou crabot C2 est en prise avec le pignon 12. Ce synchroniseur ou crabot C2 peut à partir de la position b2 où il est en prise avec le pignon fou 12 se mettre en position a2 où il sera en prise avec un troisième pignon fou 15 qui est e engrené dans un pignon fixe 16 monté sur l'arbre secondaire 5.

Le premier synchroniseur ou crabot C1 est en position b1 et C2 en position a2: la CVT 7 fonctionne selon le mode de fonctionnement du Cas 1 montré Fig. 4 comme dans le cas d'une CVT classique montrée Fig. 1.

Dans ce cas-là, le troisième synchroniseur ou crabot C3 monté sur l'arbre secondaire 5 n'est pas en prise avec le pignon fou 14 qui est engrené dans le premier pignon fixe 13.

Si le premier synchroniseur C1 est en position a1 et le deuxième synchroniseur C2 en position b2 et le troisième synchroniseur C3 en prise avec le pignon fou 14 en position a3, le deuxième mode de fonctionnement de la CVT 7 est appliqué, c'est-à-dire que le côté 2 sert d'entrée et le côté 1 de sortie de la CVT 7.

Ainsi, l'ouverture de la CVT est utilisée dans un sens (Cas A: entrée côté 1 et sortie côté 2), puis dans l'autre sens (Cas B: entrée côté 2 et sortie côté 1). Ainsi et au maximum, on peut d'une part doubler l'ouverture de la CVT ou d'autre part, et à ouverture égale, utiliser deux fois la CVT avec ces meilleurs rendements.

L'ouverture de la transmission peut au maximum être multipliée par deux. Tout dépend du choix du coefficient minimum et maximum de la CVT coaxiale 7 par le concepteur.

A ouverture égale le rendement de la transmission peut être amélioré.

Un compromis entre ces deux derniers exemples de fonctionnement est possible.

L'agencement de certains éléments du système d'engrenage peut être modifié sans quitter le champ de protection de l'invention. Ainsi, la CVT 7 peut être montée également sur l'arbre secondaire 5 avec un système d'engrenage et de couplage/découplage adapté.

## Revendications

1. Dispositif de transmission de puissance comportant
- un arbre primaire (3) destiné à être connecté à un dispositif de propulsion tel qu'un moteur thermique (4) d'un véhicule automobile,
- un arbre secondaire (5) destiné à être connecté aux roues via un différentiel (6), et
- un dispositif de transmission à variation continue CVT (7) reliant l'arbre primaire (3) et l'arbre secondaire (5),
le dispositif de transmission à variation continue CVT (7) étant de type coaxial réversible dont l'entrée située sur un premier côté (1) et la sortie située sur un deuxième côté (2) peuvent se substituer de façon symétrique, un système d'engrenages et de dispositifs de couplage/découplage permettant un premier mode de fonctionnement, où l'arbre primaire (3) est relié au premier côté (1) et l'arbre secondaire (5) au deuxième côté (2) du dispositif de transmission à variation continue CVT (7) et un deuxième mode de fonctionnement où l'arbre primaire (3) est relié au deuxième côté (2) et l'arbre secondaire (5) au premier côté (1) du dispositif de transmission à variation continue CVT (7), ledit dispositif étant **caractérisé en ce que** le système d'engrenage et de couplage/découplage comprend un arbre tertiaire (8) qui peut être relié d'un côté à l'arbre primaire (3) par le positionnement d'un premier synchroniseur ou d'un crabot (C1) sur l'arbre primaire (3) dans une première position (a1) où l'arbre primaire est en prise avec un premier pignon fou (9) qui s'engrène dans un premier pignon fixé (10) à l'arbre tertiaire (8), un deuxième pignon (11) fixé sur l'arbre tertiaire (8) s'engrène dans un deuxième pignon fou (12) sur un arbre d'entrée du deuxième côté (2) du dispositif CVT (7), un deuxième synchroniseur ou crabot (C2) positionné sur l'arbre d'entrée peut être en prise avec le deuxième pignon fou (12) et la sortie du premier côté (1) du dispositif CVT (7) étant reliée par un engrenage comprenant un troisième pignon fixe (13), un troisième pignon fou (14) et un troisième synchroniseur ou crabot (C3) à l'arbre secondaire (5) pour lui transmettre un couple d'entraînement.

2. Dispositif de transmission de puissance selon la revendication 1, **caractérisé en ce que** le premier synchroniseur ou crabot (C1) peut être mis dans une deuxième position (b1) où il est découplé du premier pignon fou (9) et en prise avec un pignon (13) fixé sur un arbre d'entrée du premier côté (1) du dispositif CVT (7), le deuxième synchroniseur ou crabot (C2) étant découplé du deuxième pignon fou (12) et en prise avec un quatrième pignon fou (15) sur l'arbre de sortie du deuxième côté (2) du dispositif CVT (7) qui s'engrène dans un quatrième pignon (16) fixé sur l'arbre secondaire (5), le troisième synchroniseur ou crabot (C3) étant découplé du troisième pignon fou (14).

3. Dispositif de transmission de puissance selon la revendication 1, **caractérisé en ce que** le dispositif CVT (7) est monté sur l'arbre secondaire (5).

4. Dispositif de transmission de puissance selon l'une quelconque des revendications précédentes, **caractérisé en ce que** les démultiplications en entrée et en sortie de ce dispositif CVT (7) sont adaptées de manière à améliorer son rendement et/ou à augmenter son ouverture.

5. Véhicule automobile pourvu d'un tel dispositif de transmission de puissance selon l'une des revendications précédentes.

## Patentansprüche

1. Kraftübertragungsvorrichtung, die Folgendes umfasst:
- eine Primärwelle (3), die dazu bestimmt ist, mit einer Antriebsvorrichtung, wie einer Brennkraftmaschine (4) eines Kraftfahrzeugs, verbunden zu sein,
- eine Sekundärwelle (5), die dazu bestimmt ist, mit den Rädern über ein Differenzial (6) verbunden zu sein, und
- eine stufenlose Übertragungsvorrichtung CVT (7), die die Primärwelle (3) und die Sekundärwelle (5) verbindet,
wobei die stufenlose Übertragungsvorrichtung CVT (7) vom koaxialen umkehrbaren Typ ist, dessen Eingang, der auf einer ersten Seite (1) liegt, und der Ausgang, der auf einer zweiten Seite (2) liegt, einander auf symmetrische Art ersetzen können, wobei ein Rädergetriebe- und Kopplungs-/Abkopplungsvorrichtungssystem einen ersten Betriebsmodus erlaubt, bei dem die Primärwelle (3) mit der ersten Seite (1) und die Sekundärwelle (5) mit der zweiten Seite (2) der stufenlosen Übertragungsvorrichtung CVT (7) verbunden ist, und einen zweiten Betriebsmodus, bei dem die Primärwelle (3) mit der zweiten Seite (2) und die Sekundärwelle (5) mit der ersten Seite (1) der Übertragungsvorrichtung CVT (7) verbunden ist, Vorrichtung **dadurch gekennzeichnet, dass** das Rädergetriebe- und Kopplungs-/Abkopplungsvorrichtungssystem eine Tertiärwelle (8) umfasst, die an einer Seite mit der Primärwelle (3) durch das Positionieren einer ersten Synchronisierungseinrichtung oder einer ersten Klaue (C1) auf der Primärwelle (3) in einer ersten Position (a1) verbunden werden kann, in der die Primärwelle mit einem Freilaufritzel (9) in Eingriff ist, das in ein erstes stationäres Ritzel (10) eingreift, das an der Tertiärwelle (8) befestigt ist, ein zweites Ritzel (11), das auf der Tertiärwelle (8) befestigt ist, in ein zweites Freilaufritzel (12) auf einer Eingangswelle auf der zweiten Seite (2) der Vorrichtung CVT (7) eingreift, eine zweite Synchronisierungsvorrichtung oder eine zweite Klaue (C2), die auf der Eingangswelle positioniert ist, mit dem zweiten Freilaufritzel (12) in Eingriff sein kann und der Ausgang der ersten Seite (1) der Vorrichtung CVT (7) durch ein Getriebe verbunden ist, das ein drittes stationäres Ritzel (13), ein drittes Freilaufrad (14) und eine dritte Synchronisierungsvorrichtung oder eine dritte Klaue (C3) an der Sekundärwelle (5) umfasst, um ihr ein Antriebsdrehmoment zu übertragen.

2. Kraftübertragungsvorrichtung nach Anspruch 1, **dadurch gekennzeichnet, dass** die erste Synchronisierungsvorrichtung oder die erste Klaue (C1) in eine zweite Position (b1) gestellt werden kann, in der sie von dem ersten Freilaufritzel (9) abgekoppelt ist und in Eingriff mit einem Ritzel (13) ist, das auf einer Eingangswelle der ersten Seite (1) der Vorrichtung CVT (7) befestigt ist, wobei die zweite Synchronisierungsvorrichtung oder die zweite Klaue (C2) von dem zweiten Freilaufritzel (12) abgekoppelt und in Eingriff mit einem vierten Freilaufritzel (15) auf der Ausgangswelle der zweiten Seite (2) der Vorrichtung CVT (7) ist, die in ein viertes Ritzel (16) eingreift, das auf der Sekundärwelle (5) befestigt ist, wobei die dritte Synchronisierungsvorrichtung oder die dritte Klaue (C3) von dem dritten Freilaufritzel (14) abgekoppelt ist.

3. Kraftübertragungsvorrichtung nach Anspruch 1, **dadurch gekennzeichnet, dass** die Vorrichtung CVT (7) auf die Sekundärwelle (5) montiert ist.

4. Kraftübertragungsvorrichtung nach einem der vorstehenden Ansprüche, **dadurch gekennzeichnet, dass** die Untersetzungen am Eingang und am Ausgang dieser Vorrichtung CVT (7) derart angepasst sind, dass sie ihre Leistung verbessern und/oder ihre Öffnung erhöhen.

5. Kraftfahrzeug, das mit einer solchen Kraftübertragungsvorrichtung nach einem der vorstehenden Ansprüche versehen ist.

## Claims

1. A power transmission device comprising
- a primary shaft (3) intended to be connected to a propulsion device such as a combustion engine (4) of a motor vehicle,
- a secondary shaft (5) intended to be connected to the wheels via differential (6), and
- a continuously variable transmission CVT device (7) connecting the primary shaft (3) and the secondary shaft (5),
the continuously variable transmission CVT device (7) being of the reversible coaxial type, the input of which situated on a first side (1) and the output of which on a second side (2) can be substituted for one another symmetrically, a system of gears and of coupling/uncoupling devices allowing a first mode of operation, in which the primary shaft (3) is connected to the first side (1) and the secondary shaft (5) to the second side (2) of the continuously variable transmission CVT device (7), and a second mode of operation, in which the primary shaft (3) is connected to the second side (2) and the secondary shaft (5) to the first side (1) of the continuously variable transmission CVT device (7), said device being **characterized in that** the system of gears and of coupling/uncoupling includes a tertiary shaft (8) which can be connected on one side to the primary shaft (3) by the positioning of a first synchronizer or of a claw (C1) on the primary shaft (3) in a first position (a1) in which the primary shaft is engaged with a first idling gear (9) which meshes in a first fixed gear (10) to the tertiary shaft (8), a second gear (11) fixed on the tertiary shaft (8) meshes in a second idling gear (12) on an input shaft of the second side (2) of the CVT device (7), a second synchronizer or claw (C2) positioned on the input shaft can be engaged with the second idling gear (12) and the output of the first side (1) of the CVT device (7) being connected by a gearing including a third fixed gear (13), a third idling gear (14) and a third synchronizer or claw (C3) to the secondary shaft (5) to transmit a drive torque to it.

2. The power transmission device according to Claim 1, **characterized in that** the first synchronizer or claw (C1) can be placed in a second position (b1) in which it is uncoupled from the first idling gear (9) and engaged with a gear (13) fixed on an input shaft of the first side (1) of the CVT device (7), the second synchronizer or claw (C2) being uncoupled from the second idling gear (12) and engaged with a fourth idling gear (15) on the output shaft of the second side (2) of the CVT device (7) which meshes in a fourth gear (16) fixed on the secondary shaft (5), the third synchronizer or claw (C3) being uncoupled from the third idling gear (14).

3. The power transmission device according to Claim 1, **characterized in that** the CVT device (7) is mounted on the secondary shaft (5).

4. The power transmission device according to any one of the preceding claims, **characterized in that** the reductions at input and at output of this CVT device (7) are adapted to as to improve its efficiency and/or to increase its opening.

5. A motor vehicle provided with such a power transmission device according to one of the preceding claims.
